Europäisches Patentamt

European Patent Office

Office européen des brevets

(19)

(11) Publication number: **0 043 221**

**B1**

(12) **EUROPEAN PATENT SPECIFICATION**

(45) Date of publication of patent specification: **20.03.85**

(51) Int. Cl.⁴: **B 62 K 23/06**

(21) Application number: **81302813.1**

(22) Date of filing: **23.06.81**

(54) **Speed-change control assembly.**

(30) Priority: **27.06.80 JP 91242/80 U**

(43) Date of publication of application:
**06.01.82 Bulletin 82/01**

(45) Publication of the grant of the patent:
**20.03.85 Bulletin 85/12**

(84) Designated Contracting States:
**BE DE FR GB IT**

(56) References cited:
**FR-A-2 280 540**
**FR-A-2 345 340**
**FR-A-2 428 564**
**GB-A- 996 865**
**US-A-4 046 025**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi Sakai-shi**
**Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a speed-change control assembly for mounting directly on a cycle frame member provided with a direct mounting bed.

Speed-change control devices of the direct-mounting type in which is used a direct-mounting boss or bed welded to part of the bicycle frame, e.g. the top tube or down tube thereof, are well known. In such devices there is used a control lever pivot shaft integrally formed with the direct-mounting bed, so that the control lever and associated parts are normally installed thereon, one component after another, by the manufacturer. In more detail known such devices comprise a control lever pivôt shaft; a control lever having a boss; a first axial support means for axially supporting said control lever in position on said pivot shaft; and a second axial support means including a resilient biasing means for supporting said control lever with its boss against said first axial support means with sufficient frictional force therebetween to retain said control lever in a desired angular position relative thereto whilst permitting relative rotation therebetween for changing speed in a speed-change mechanism connected thereto in use of said assembly.

As the control device includes a number of discrete parts, for example, washer, dished spring, and mounting screw, their assembly and stock control is relatively troublesome.

FR—A—1417827 discloses a speed-change control assembly for mounting directly on a cycle frame member (F) provided with a mounting boss having a non-circular transverse cross-sectional shape engagement portion and having an axially extending releasable fastening means component which extends generally radially of said frame member (F), said control assembly comprising a control lever having a boss; a first axial support means for axially supporting said control lever in position; a second axial support means including a positioning means for supporting said control lever with its boss against said first axial support means with sufficient resistance to relative movement therebetween to retain said control lever in a desired angular position relative thereto whilst permitting relative rotation therebetween for changing speed in a speed-change mechanism connected thereto in use of said assembly, said assembly having a bore for receiving therethrough, in use of the assembly a part of said mounting boss and/or a control assembly fastening means component engageable with said axially extending mounting boss releasable fastening means component so as to secure said control assembly to said mounting boss.

It is an object of the present invention to reduce the above disadvantages.

. The present invention is characterised by the fact that said control assembly includes a control lever pivot shaft on which said control lever and first and second axial support means are mounted so as to form a substantially unitary control assembly, said control assembly having a non-circular cross-sectional shape receiving portion formed and arranged for nestingly receiving, in use of the assembly, said mounting boss engagement portion for non-rotatable engagement therebetween.

Thus according to the present invention the control lever first shaft is provided separately from the bed fixed to the cycle frame member, the bed being merely adapted for engagement by suitable fastening means e.g. provided with a screwthreaded bore or shank. The control lever, washer and positioning means are all assembled on the separate control lever pivot shaft to form a control lever assembly which can be directly mounted on the bed for mounting of the speed-change control device on the cycle frame.

The speed-change control assembly of the invention can therefore be simply and readily mounted on a said frame member at a said bed directly without the need for disturbing any of its components. Accordingly final assembly to provide a speed-change control device on a cycle when desired is particularly simple and permits considerably simplified stockholding and component handling since instead of having to deal with a significant number of different components it is only necessary to use a single assembly — with an appropriate fastening means such as a screw or the like.

Further preferred features and advantages of the invention will appear from the following description given by way of example of some preferred embodiments illustrated with reference to the accompanying drawings in which:

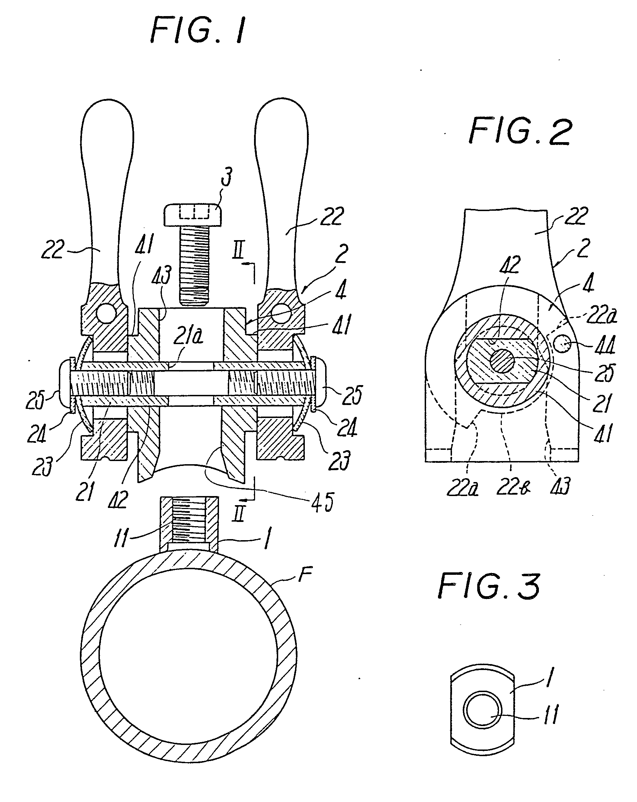

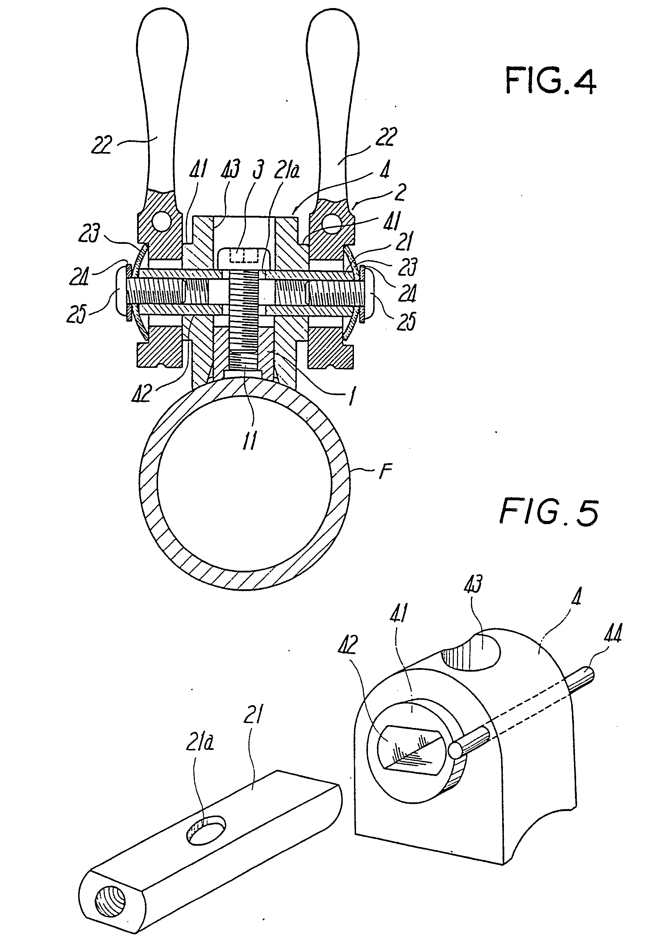

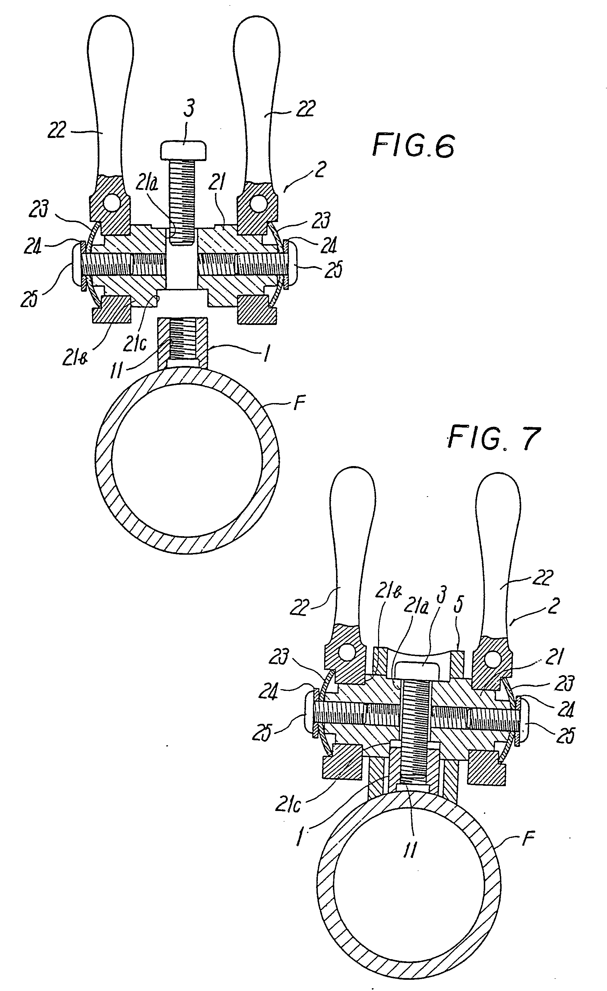

Fig. 1 is a sectional view of a first speed-change control device of the invention, prior to its final assembly; Fig. 2 is a sectional view taken on the line II—II in Fig. 1; Fig. 3 is a plan view of a direct-mounting bed alone; Fig. 4 is a sectional view of the Fig. 1 embodiment after final assembly thereof; Fig. 5 is a perspective view of the control lever shaft and mounting member of the above device; and Figs. 6 and 7 are sectional views corresponding to Fig. 1 of second and third speed change control devices of the invention.

A speed-change control device of the invention as shown in Figs. 1 to 5 comprises a direct-mounting bed 1 secured directly to a bicycle frame member F, e.g., a down tube, for example by welding or the like, a control lever assembly 2, and a fastening means engageable with said bed, conveniently a releasable fastening means such as a screw or bolt means 3, for securing the control lever assembly 2 onto the bicycle frame member F via said bed 1.

The bed 1, as shown in Fig. 3, is non-circular in plan and adapted for engagement by the bolt means 3 having a central threaded bore 11 extending substantially perpendicularly to the longitudinal axis of the frame member F. The bottom edge of the bed 1 is of course curved where it meets the outer peripheral surface of the frame member F.

The control lever assembly 2 comprises a control lever 22 and a control lever pivot shaft 21 whose pivoting axis is substantially perpendicular to that of said threaded bore 11 in the bed 1 when said assembly 2 is mounted thereon. The control lever 22 is retained on said pivot shaft 21 against a first abutment means (described below) by a second abutment means comprising a retaining screw means 25, a dished spring 23 and a washer 24. The control lever assembly 2 shown in Figs. 1 to 5 uses a generally box-shaped mounting member 4 which is clamped against the frame member F around said bed 1 by the bolt means 3 which extends through the interior of said mounting member 4 and through centrally disposed aligned apertures 21a in said pivot shaft 21 as will be further described below, to screwthreadedly engage the threaded bore 11 in said bed 1. As may be seen in the drawings there is in this embodiment actually provided a pair of control levers 22 mounted on respective ends of said pivot shaft 21.

The mounting member 4 is, as shown in Fig. 5, provided on the outside of its opposed side walls with integrally formed substantially flat seats 41 constituting the first abutment means against which the respective axial ends of the bosses of two control levers 22 abut. The control lever pivot shaft 21 extends through a pivot shaft bore 42 extending between said two seats 41 substantially at right-angles to a central bore 43 through which the fixing bolt means 3 is disposable. The front and rear walls connecting the side walls of the mounting member 4 are arcuate at their bottom edges having a radius at curvature corresponding approximately to that of the outer peripheral surface of the frame member F.

The dished springs 23, washers 24, screw members 25 and seats 41 of the abovedescribed embodiment constituting the second abutment means function as a retaining means for maintaining the control levers in a given position relative to the control lever pivot shaft 21 against the face of a return spring in a gear change mechanism(s) controlled by the levers. Thus each seat 41 abuts one side of the boss of a respective control lever 22 to act as an axial stop means therefor, the dished springs 23 and screw members 25 biasing said control levers 22 against said seats 41 to provide a predetermined frictional resistance force against relative rotational movement therebetween.

As may be seen in Fig. 1 the control levers 22 and the other means holding them in position on the control lever pivot shaft 21 together form a single control lever assembly 2 which can be simply and directly mounted on the bed thereby considerably simplifying final assembly and handling of the control lever components. Specifically the control lever assembly 2 is mounted on the frame member F by simply placing it in position over the bed 1 and then screwing the mounting screw 3 (through the central aligned bores 21a) into the threaded bore 11 of the bed 1.

As an alternative to the use of the dished springs 23 for retaining the control lever(s) 22 in position against the force of a return spring of a derailleur or other gear change mechanism (not shown), there may be used other friction means or even a positive positioning mechanism comprising for example recesses and an engagement body, such as a ball or the like, selectively engageable therewith.

The control lever pivot shaft 21 and the central bore 42 of the mounting member 4, as shown in Figs. 2 and 5 both have two flat faces on opposite sides thereof, the first shaft 21 being thereby mounted non-rotatably in said mounting member 4, with its respective axial ends projecting outwardly from each end of said central bore and with its centrally disposed aligned apertures 21a aligned with the threaded bore 11 of the bed 1.

In the above described embodiment, the mounting member 4, as shown in Fig. 4, closely contacts the outer peripheral surface of the frame member F when the screw member 3 is screwed in tightly thereby substantially rigidly mounting the lever assembly 2 on said frame member F. It may also be noted that, the mounting member 4, with its integrally formed seats 41, avoids the need for washers between itself and the control levers 22. The control lever pivot shaft 21, when the mounting member 4 is box-shaped, can be formed of a drawn material or pipe as shown in Fig. 5, thereby being relatively inexpensive to produce.

The mounting member 4, as shown in Figs. 2 and 5, is provided with pins 44 projecting from its side walls parallel to the first shaft bore 42, said pins 44 acting as end stops to limit the range of pivotal movement of the control levers 22. The pins 44 may be formed integrally with the mounting member 4, but preferably are provided by a single discrete pin member formed separately from the mounting member 4, and longer than the separation between the side walls of the mounting member 4. An intermediate portion of the pin member has an enlarged diameter which is a press fit inside a corresponding bore provided in said mounting member 4.

In this case, the boss of each control lever 22 is, as shown by the dashed line in Fig. 2, provided with a part-circumferentially extending cut-out or recess 22b having a pair of end stop faces 22a engageable with the respective pin 44 in respective end limit positions of the control levers 22.

The central bore 43 of the mounting member 4 has a progressively increasing internal diameter portion in the vicinity of and towards its bottom edges and the direct-mounting bed 1 has a correspondingly increasing external diameter towards its base on its opposed arcuate end walls so that a wedging effect is obtained as the mounting member 4 is fitted onto the bed 1 thereby obtaining a still more rigid fixing of the mounting member 4 on said bed 1.

Alternatively, the control lever assembly 2 could, as shown in Fig. 6, dispense with the use of a mounting member 4, the control lever pivot shaft 21 itself instead being provided with: stepped portions 21b for axially supporting the control levers 22; an axially intermediate mounting bore 21a similar to that provided in the abovedescribed embodiment for receiving therethrough the fixing screw 3; and, at the lower end of said bore 21a, a socket 21c for receiving therein the upper end of the bed 1.

Fig. 7 shows a mounting member 5 generally similar to the mounting member 4 of the first described embodiment of Figs. 1 to 5 in use with the control lever assembly 2 shown in Fig. 6. In this case, the mounting member 5 does not need to have the seats 41 because the control levers 22 are supported by the stepped portions 21b of the control lever pivot shaft 21, thereby permitting the use of a simpler mounting member construction, for example, as a simple pipe member.

As may be seen from the above, in each case the control lever assembly can be directly mounted on the direct-mounting bed 1, so that is it not necessary to separately handle the control levers 22, pivot shaft 21, dished springs 23, washers 24, and screw members 25, thereby considerably simplifying final assembly and handling by the party carrying out the final assembly.

Furthermore, the mounting of the control lever assembly on the bed 1 by simply screwing in of the screw member 3 can be readily and quickly effected by unskilled labour.

Naturally, as a further alternative the bed 1 could be provided at its upper end with a male threaded portion and the screw member 3 replaced by a female threaded means e.g. a nut.

**Claims**

1. A speed-change control assembly for mounting directly on a cycle frame member (F) provided with a mounting boss (1) having a non-circular transverse cross-sectional shape engagement portion and having an axially extending releasable fastening means component (11) which extends generally radially of said frame member (F), said control assembly (2) comprising a control lever (22) having a boss; a first axial support means (41, 21b) for axially supporting said control lever (22) in position; a second axial support means (23—25) including a positioning means (23) for supporting said control lever (22) with its boss against said first axial support means (41, 21b) with sufficient resistance to relative movement therebetween to retain said control lever (22) in a desired angular position relative thereto whilst permitting relative rotation therebetween for changing speed in a speed-change mechanism connected thereto in use of said assembly (2), said assembly having a bore (21a) for receiving therethrough, in use of the assembly (2) a part of said mounting boss (1) and/or a control assembly fastening means component (3) engageable with said axially extending mounting boss releasable fastening means component (11) so as to secure said control assembly (2) to said mounting boss (1) characterized in that:

said control assembly includes a control lever pivot shaft (21) on which said control lever (22) and first and second axial support means (41, 21b, 23—25) are mounted so as to form a substantially unitary control assembly, said control assembly having a non-circular cross-sectional shape receiving portion (21c, 45) formed and arranged for nestingly receiving, in use of the assembly, said mounting boss engagement portion for non-rotatable engagement therebetween.

2. A control assembly according to Claim 1, which assembly (2) includes a mounting member (4) formed and arranged for abutment with said frame member (F) when said assembly (2) is secured to said mounting boss (1) on said frame member F) and for supporting said pivot shaft (21).

3. A control assembly according to Claim 2, wherein said pivot shaft (21) is in the form of a generally tubular member, said mounting member is in the form of a generally box-shaped member having a pivot shaft bore (42), said pivot shaft (21) being non-rotatably mounted in said mounting member (4) so as to project outwardly therefrom said mounting member (4), and said control lever (22) is mounted on an outwardly projecting portion of said pivot shaft (21).

4. A control assembly according to Claim 3, wherein said mounting member (4) is provided with an integrally formed seat (41) constituting said first axial support means for said control lever (22).

5. A control assembly according to Claim 2, wherein said mounting member (4) is in the form of a generally tubular member and said control lever pivot shaft (21) is provided with a stepped portion (21b) constituting said first axial support for said control lever (22), in the region of a respective end of said pivot shaft (21).

6. A control assembly according to Claim 1, wherein said control lever pivot shaft (21) has a radially stepped portion (21b) constituting said first axial support for said control lever (22).

7. A control assembly according to Claim 1, which assembly includes a pair of control levers (22) and a pair of first axial support means (41) and a pair of second axial support means (23—25) formed and arranged for supporting control levers at respective ones of the opposite ends of a said one pivot shaft (21).

8. A control assembly according to any one of the preceding claims when mounted on a said mounting boss (1) of a said frame member (F) with a said control assembly releasable fastening means component (3) extending through said transverse bore (21a) of said pivot shaft (21) and engaged with said mounting boss (1) so as to secure said assembly to said frame member (F) at said mounting boss (1).

9. A control assembly according to Claim 8 wherein said axially extending mounting boss releasable fastening means component comprises a threaded bore (11) and said control assembly releasable fastening means component comprises a bolt or screw (3).

10. A control assembly according to Claim 8 or Claim 9 wherein said mounting boss (1) is welded or otherwise fusibly connected to said frame member (F).

11. A control assembly according to any one of Claims 1 to 10 wherein the positioning means includes a resilient biasing means (23) for supporting the control lever (22) with its boss against the first axial support means (41, 21b) with said sufficient resistance to relative movement therebetween.

**Revendications**

1. Dispositif de commande de changement de vitesse, à monter directement sur un élément (F) de cadre de bicyclette muni d'un bossage de montage (1) qui comporte une partie d'engagement à section transversale non circulaire et un élément axial (11) de fixation libérale qui s'étend sensiblement radialement par rapport à l'élément de cadre (F), ce dispositif de commande (2) comprenant un levier de commande (22) muni d'un bossage; un premier support axial (41, 21b) pour supporter axialement le levier de commande (22) en position; un deuxième support axial (23—25) comportant un moyen de détermination de position (23) pour supporter le levier de commande (22) avec son bossage contre le premier support axial (41, 21b), de manière à engendrer une résistance au mouvement relatif entre ces parties qui est suffisante pour retenir le levier de commande (22) dans une position angulaire désirée par rapport au premier support tout en permettant une rotation relative entre les dites parties pour changer la vitesse dans un mécanisme de changement de vitesse connecté au dispositif, lors de l'utilisation du dispositif (2), le dispositif comportant un orifice (21a) qui peut recevoir, lors de l'utilisation du dispositif (2), une partie du bossage de montage (1) et/ou un élément (3) de fixation du dispositif de commande qui peut s'engager avec l'élément axial (11) de fixation libérable du bossage de montage de manière à fixer le dispositif de commande (2) au bossage de montage (1), caractérisé en ce que le dispositif de commande comprend un axe de pivot (21) de levier de commande sur lequel le levier de commande (22) et les premier et deuxième supports axiaux (41, 21b, 23—25) sont montés de manière à constituer un dispositif de commande sensiblement unitaire, le dispositif de commande comportant une partie de réception (21c, 45) de section transversale non circulaire prévue et agencée pour recevoir par emboîtement, lors de l'utilisation du dispositif, ladite partie d'engagement du bossage de montage de manière à obtenir un engagement non tournant entre ces parties.

2. Dispositif de commande de changement de vitesse suivant la revendication 1, ce dispositif (2) comprenant une pièce de montage (4) prévue et agencée pour venir en butée avec l'élément de cadre (F), lorsque le dispositif (2) est fixé au bossage de montage (1) de l'élément de cadre (F), et pour supporter l'axe de pivot (21).

3. Dispositif de commande suivant la revendication 2, dans lequel l'axe de pivot (21) est sous la forme d'une pièce sensiblement tubulaire, la pièce de montage est sous la forme d'une pièce semblable à une boîte comportant un passage (42) pour l'axe de pivot, l'axe de pivot (21) étant monté de façon non tournante dans la pièce de montage (4) de façon à faire saillie à l'extérieur de la pièce de montage (4), et le levier de commande (22) est monté sur une partie de l'axe de pivot (21) en saillie vers l'extérieur.

4. Dispositif de commande suivant la revendication 3, dans lequel la pièce de montage (4) comporte un siège (41), formé solidairement, qui constitue le premier support axial pour le levier de commande (22).

5. Dispositif de commande suivant la revendication 2, dans lequel la pièce de montage (4) est sous la forme d'une pièce sensiblement tubulaire et l'axe de pivot (21) du levier de commande présente une partie épaulée (21b), constituant le premier support axial pour le levier de commande (22), dans la région d'une extrémité respective de l'axe de pivot (21).

6. Dispositif de commande suivant la revendication 1, dans lequel l'axe de pivot (21) du levier de commande comporte une partie (21b) radialement épaulée, qui constitue le premier support axial pour le levier de commande (22).

7. Dispositif de commande suivant la revendication 1, ce dispositif comprenant une paire de leviers de commande (22) et une paire de premiers supports axiaux (41) et une paire de deuxièmes supports axiaux (23—25), prévus et agencés pour supporter les leviers de commande à l'une et l'autre des extrémités opposées de l'axe de pivot (21), respectivement.

8. Dispositif de commande suivant l'une quelconque des revendications précédentes, monté sur un bossage de montage (1) d'un élément de cadre (F), un élément (3) de fixation libérable du dispositif de commande traversant l'orifice transversal (21a) de l'axe de pivot (21) et s'engageant avec le bossage de montage (1) de manière à fixer le dispositif à l'élément de cadre (F), au bossage de montage (1).

9. Dispositif de commande suivant la revendication 8, dans lequel l'élément axial de fixation libérable du bossage de montage comporte un orifice taraudé (11) et l'élément de fixation libérable du dispositif de commande comprend un boulon ou une vis (3).

10. Dispositif de commande suivant la revendication 8 ou la revendication 9, dans lequel le bossage de fixation (1) est soudé ou relié par fusion d'une autre façon à l'élément de cadre (F).

11. Dispositif de commande suivant l'une quelconque des revendications 1 à 10, dans lequel les moyens de détermination de position comprennent des moyens de poussée élastique (23) pour supporter le levier de commande (22) avec son bossage contre le premier support axial (41, 21b), de manière à engendrer une résistance suffisante au mouvement relatif entre ces parties.

## Patentansprüche

1. Bedienungseinrichtung für eine Fahrradgangschaltung zur Befestigung direkt an einem Fahrradrahmenteil (F) welches mit einem Befestigungsvorsprung (1) versehen ist, welcher ein Eingriffsteil mit nicht-kreisförmigem Querschnitt und ein axial verlaufendes, lösbares Befestigungselement (11) aufweist, welches sich im wesentlichen radial vom Rahmenteil (F) aus erstreckt, wobei die Bedienungseinrichtung (2) einen Bedienungshebel (22) mit einem Ansatz aufweist, ein erstes axiales Stützteil (41, 21b), das den Bedienungshebel (2) axial in seiner Stellung abstützt, und ein zweites axiales Stützteil (23—25) mit einer Positioniervorrichtung (23), welches den Bedienungshebel (22) mit dem Ansatz gegen das erste Stützteil (41, 21b) abstützt, mit ausreichendem Widerstand gegen eine Relativbewegung dazwischen, um den Bedienungshebel (22) in einer gewünschten Winkelstellung relativ zum Stützteil zu halten, während eine Relativbewegung dazwischen möglich ist, um die Einstellung einer damit verbundenen Gangschaltung zu ermöglichen, wobei die Einrichtung eine Bohrung (21a) aufweist, um im Betrieb einen Teil des Befestigungsvorsprunges (1) und/oder ein Befestigungsteil (3) aufzunehmen, welches mit dem lösbaren, axial verlaufenden Befestigungselement (11) des Befestigungsvorsprunges in Eingriff bringbar ist, um die Bedienungseinrichtung (2) am Befestigungsvorsprung (1) zu befestigen, dadurch gekennzeichnet, daß die Bedienungseinrichtung eine Bedienungshebelschwenkelle (21) aufweist, an welcher der Bedienungshebel (22) und das erste und das zweite Stützteil (41, 21b, 23—25) so befestigt sind, daß sie eine im wesentlichen einstückige Bedienungseinrichtung bilden, wobei die Bedienungseinrichtung ein Aufnahmeteil (21c, 45) mit nichtkreisförmigen Querschnitt aufweist, welches so geformt und angeordnet ist, daß es im Betrieb der Einrichtung das Eingriffsteil des Befestigungsvorsprunges für einen nicht verdrehbaren Eingriff dazwischen aufnimmt.

2. Bedienungseinrichtung nach Anspruch 1, dadurch gekennzeichnet, daß sie ein Befestigungsteil (4) aufweist, das so geformt und angeordnet ist, daß es am Rahmenteil (F) anliegt, wenn die Einrichtung (2) am Befestigungsvorsprung (1) auf dem Rahmenteil (F) befestigt ist, und daß es die Schwenkwelle (21) abstützt.

3. Bedienungseinrichtung nach Anspruch 2, dadurch gekennzeichnet, daß die Schwenkwelle (21) ein im wesentlichen rohrförmiges Teil ist, daß das Befestigungsteil im wesentlichen die Form eines Kastens mit einer Schwenkwellenbohrung (42) hat, daß die Schwenkwelle (21) nicht verdrehbar im Befestigungsteil (4) angeordnet ist, so daß sie sich nach außerhalb des Befestigungsteils (4) erstreckt und daß der Bedienungshebel (22) an einem nach außen vorspringenden Teil der Schwenkwelle (21) befestigt ist.

4. Bedienungseinrichtung nach Anspruch 3, dadurch gekennzeichnet, daß das Befestigungsteil (4) mit einem einstückig ausgebildeten Sitz (41) versehen ist, welcher das erste axiale Stützteil für den Bedienungshebel (22) bildet.

5. Bedienungseinrichtung nach Anspruch 2, dadurch gekennzeichnet, daß das Befestigungsteil (4) im wesentlichen rohrförmig ist, und daß die Bedienungshebelschwenkwelle (21) im Bereich ihres jeweiligen Endes mit einem Stufenteil (21b) versehen ist, welches das erste axiale Stützteil für den Bedienungshebel (22) bildet.

6. Bedienungseinrichtung nach Anspruch 1, dadurch gekennzeichnet, daß die Bedienungshebelschwenkwelle (21) ein radial gestuftes Teil (21b) aufweist, welches das erste axiale Stützteil für den Bedienungshebel (22) bildet.

7. Bedienungseinrichtung nach Anspruch 1, dadurch gekennzeichnet, daß sie ein Paar von Bedienungshebeln (22) aufweist, und daß ein Paar von ersten axialen Stützteilen (41) und ein Paar von zweiten axialen Stützteilen (23—25) so geformt und angeordnet sind, daß sie die Bedienungshebel an den jeweiligen gegenüberliegenden Enden der Schwenkwelle (21) abstützen.

8. Bedienungseinrichtung nach einem der vorangehenden Ansprüche, welche auf dem Befestigungsvorsprung (1) des Rahmenteils (F) befestigt ist, dadurch gekennzeichnet, daß sich das lösbare Befestigungselement (3) für die Bedienungseinrichtung durch eine Querbohrung (21a) der Schwenkwelle (21) erstreckt und im Eingriff mit dem Befestigungsvorsprung (1) steht, so daß die Einrichtung sicher am Rahmenteil (f) am Befestigungsvorsprung (1) befestigt ist.

9. Bedienungseinrichtung nach Anspruch 8, dadurch gekennzeichnet, daß das axial verlaufende, lösbare Befestigungselement des Befestigungsvorsprungs eine Gewindebohrung (11) aufweist und daß das lösbare Befestigungsteil für die Bedienungseinrichtung ein Bolzen oder eine Schraube (3) ist.

10. Bedienungseinrichtung nach den Ansprüchen 8 oder 9, dadurch gekennzeichnet, daß der Befestigungsvorsprung (1) durch Schweißen oder einen anderen Schmelzvorgang am Rahmenteil (F) befestigt ist.

11. Bedienungseinrichtung nach einem der Ansprüche 1 bis 10, dadurch gekennzeichnet, daß die Positioniervorrichtung ein elastisches Vorspannelement (23) aufweist zum Abstützen des Bedienungshebels (22) mit seinem Ansatz gegen das erste Stützteil (41, 21b) mit ausreichendem Widerstand gegen eine Relativbewegung dazwischen.

FIG. 1

FIG. 2

FIG. 3

FIG.4

FIG.5

FIG.6

FIG. 7